# EUROPEAN PATENT SPECIFICATION

(11) **EP 0 591 190 B1**
(45) Date of publication and mention of the grant of the patent: **03.09.1997**
(21) Application number: 91913739.8
(22) Date of filing: 24.06.1991
(51) Int. Cl.: G01F 3/20, G01F 1/54, G01F 3/24

(54) **FLUID FLOW METER**
DURCHFLUSSMESSER FÜR FLUIDE
DEBITMETRE POUR UN FLUIDE

(43) Date of publication of application: 13.04.1994
(73) Proprietor: MEASUREMENT TECHNOLOGY INTERNATIONAL, Santa Fe Springs, California 90670 (US)
(72) Inventor: INGMAN, Dov, 34 980 Haifa (IL)
(74) Representative: Godsill, John Kenneth
(86) International application number: PCT/US91/04502
(87) International publication number: WO 93/00571

(56) References cited:
- WO-A-90/00248
- US-A- 398 013
- US-A- 4 409 830
- US-A- 4 920 794

## Description

The present invention relates generally to devices for measuring volumetric fluid flow and more specifically to a fluid flow meter having a flexible membrane which operates to permit passage of fluid in discrete quanta, i.e. as travelling waves.

Travelling wave fluid meters generally operate by measurement of the rate of undulation of a member which vibrates or undulates as fluid flows past the member. One early form of fluid meter included an undulating metallic spring confined in a fluid flow chamber and a mechanical counter for indicating the amount of fluid flowing therethrough. A more recent type of travelling wave flow meter utilizes an undulating membrane formed of piezoelectric material which generates electrical signals as a function of the rate of undulation.

Such flow meters are generally limited in use to measurement of noncompressible fluids, such as liquids. A metallic spring can offer excessive resistance to the flow of a gas, and a light membrane subject to turbulence at high flow rates and deformation at elevated temperatures can introduce errors in the signal processing necessary for flow measurement with such a device.

An improved type of travelling wave flow meter is disclosed in WO90/0028 in which there is a membrane providing for the travelling waves of fluid flow which is as light as possible while effectively blocking the free flow of fluid past the membrane, yet having permanent undulation characteristics. Despite that disclosure, it has been found that metal foils are subject to corrosion, and that plastic membranes tend to acquire a permanent deformation, especially upon exposure to high temperatures, interfering with undulation of the membrane. It would also be desirable to provide a travelling wave membrane which would be largely unaffected by the influence of gravity due to positioning of the flow meter, and which would also have dimensional stability against twisting of the membrane, to prevent free flow past the edges of the membrane.

According to the present invention, there is provided a fluid flow meter, comprising:
a housing having a pair of fluid ports and defining a fluid flow path therebetween; and a flexible membrane extending lengthwise in the direction of fluid flow and mounted at opposing longitudinal end regions of the membrane within the housing, said membrane being adapted to flex so as to permit passage of discrete quanta of fluid along the flow path, each quantum of fluid having a known volume varying as a function of flow rate; characterised by at least one elongate resilient member incorporated in the membrane and forming a plurality of lines of resilience extending between said longitudinal end regions of said membrane in the direction of said fluid flow path for providing the membrane with resilience for undulation by flexing.

Means may be provided for generating electrical signals corresponding to flexure of the membrane. Means may also be provided for receiving the electrical signals over a measured period of time, determining the rate of the electrical signals, determining the volume of the fluid quanta based upon the electrical signals, and thereby determining a fluid flow rate along the flow path.

According to one embodiment of the invention, the means for generating electrical signals comprises first and second piezoelectric members disposed, respectively, on first and second stop members on opposite sides of the membrane and in electrical communication with monitoring apparatus such that undulation of the membrane causes the membrane to alternatingly contact the stop members to generate an electrical signal upon release of each quantum of fluid.

In accordance with another embodiment of the invention, there is monitoring apparatus including means for identifying electrical signals generated by flexure of the membrane upon release of a single quantum of fluid, and also preferably comprising means for alternatingly receiving the electrical signals from the first and second piezoelectric members to filter out signals not due to true undulation of the membrane.

For a better understanding of the invention, and to show how the same may be carried into effect, reference will now be made, by way of example, to the accompanying drawings, in which:-
Fig. 1 is a perspective illustration of a quantum fluid flow meter, constructed according to WO90/00248;
Fig. 2 is a sectional view of the flow meter of Fig. 1, taken along line 2-2 therein;
Fig. 3 is a cross-section taken along line 3-3 in Fig. 2;
Fig. 4 is a cross-section taken along line 4-4 in Fig. 3;
Fig. 5 shows an enlarged detail of a portion of the cross-section shown in Fig. 4;
Fig. 6 shows an enlarged detail of a portion of the cross-section shown in Fig. 4; constructed according to an alternative;
Fig. 7 is a sectional illustration of a portion of a piezoelectric member useful in the flow meter of Fig. 1;
Fig. 8 is an enlarged cross-sectional view taken along line 8-8 in Fig. 3;
Fig. 9 is a block diagram illustration of electronic apparatus associated with a fluid flow meter of the present invention;
Fig. 10 is a top view of a first embodiment of a flexible membrane;
Fig. 11 is a cross-sectional view of the embodiment of Fig. 10 taken along line 26-26;
Fig. 12 is a top plan view of a further embodiment of a flexible membrane;
Fig. 13 is a cross-sectional view of the embodiment of Fig. 12 taken along line 28-28;
Fig. 14 is a top plan view of a further embodiment of a flexible membrane;
Fig. 15 is a cross-sectional view of the embodiment of Fig. 14 taken along line 30-30;
Fig. 16 is a top plan view of a further embodiment of a flexible membrane;
Fig. 17 is a cross-sectional view of a further embodiment of a flexible membrane;
Fig. 18 is a view similar to that of Fig. 8, but showing a construction according to a further alternative embodiment of the invention;
Fig. 19 is a view similar to that of Fig. 8, but showing another further alternative embodiment of the invention;
Fig. 20 is a view similar to that of Fig. 3, showing a mechanism for rendering the membrane flat during periods of no-flow; and
Fig. 21 is a view similar to that of Fig. 20 showing a mechanism for adjusting the tension on the membrane.

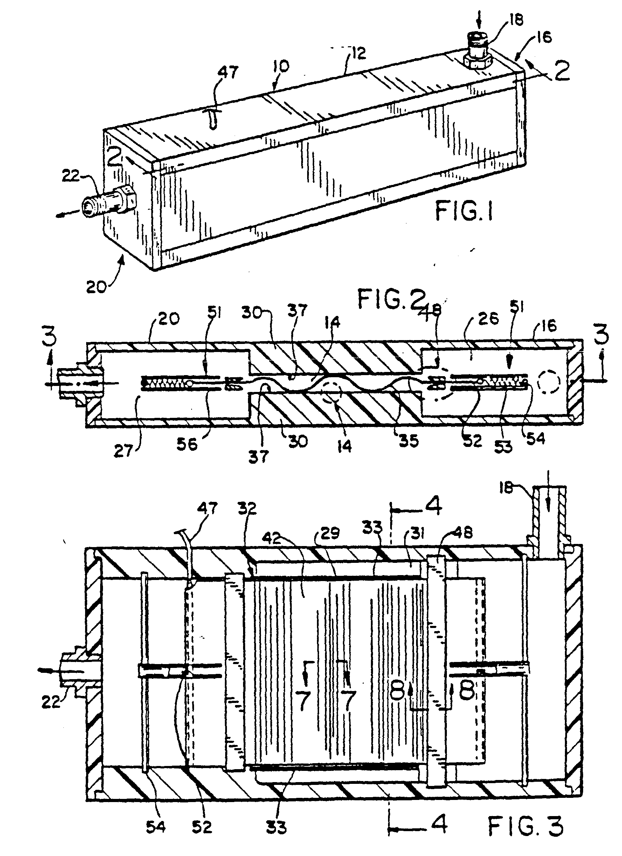

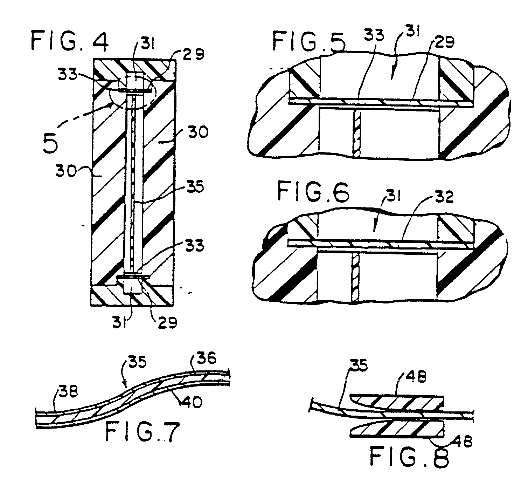

Referring to Figs. 1, 2 and 3, there is shown a known positive displacement fluid flow meter 10 according to WO90/00248, which includes a housing 12 defining a fluid flow chamber 14 (Fig. 2) having first and second ends 16 and 20, and having respective first and second fluid ports 18 and 22.

Although fluid ports 18 and 22 function respectively as an inlet and outlet, it will be appreciated from the description of WO90/00248 that the internal arrangement of flow meter 10 is such that fluid flow may take place in any chosen direction and with the flow meter at any preferred orientation.

According to a preferred usage, flow meter 10 is used for metering the flow of compressible fluids, such as gas. As, however, the flow meter may also be used for the metering of incompressible fluids such as oil or water, the flow of "fluid" is described herein throughout except where not applicable.

Housing 12 includes a first end receiving chamber 25 for receiving fluid flow from inlet 18 prior to the fluid passing through flow chamber 14. Chamber 26 permits any debris and, in the case of gas flow, moisture, to be deposited therein prior to flow through flow chamber 14. There is also provided a second end chamber 27, similar to first end chamber 26, for receiving therein any deposition of debris and moisture in a case of flow in a direction opposite to that indicated.

Discrete quanta of fluid, each having a known volume, are permitted to pass across a membrane 35 and volumetric flow may be determined according to the number of such quanta passing across the membrane. This is described in greater detail in WO90/00248 the contents of which are herein incorporated by reference. Membrane 35 is positioned such that in a non-flow situation edges 33 thereof are very close to sidewalls 29, typically in the order of magnitude of several scores of microns, such that leakage of any fluid therepast is prevented, it is preferable in a flow situation that the gap between the membrane edges and the sidewalls be reduced.

With reference additionally to Figs. 4 and 5, flow chamber 14 is, therefore, provided with a pair of preferably rigid first sidewalls 30 and a pair of non-rigid second sidewalls 29 fabricated of a flexible elastomer, such as rubber. As fluid passes across membrane 35, pressure inside flow chamber 14 drops and the flexible, second sidewalls 29 tend, therefore, to move slightly inwards so as to reduce the gap between edges 33 of the membrane and sidewalls 29 to a fluid boundary layer thickness. Due to the high resistance to flow along the gap, leakage is, therefore, substantially prevented. The inward movement of sidewalls 29 is further facilitated by spaces 31 provided adjacent to edges 33 of membrane 35.

Referring briefly to Fig. 6, it has been found that when second sidewalls are not made from a flexible materials, fluid leakage may be substantially prevented by providing them with a roughened surface 32 (also shown in Fig. 3).

With particular reference to Fig. 2 sidewalls 30 are preferably coated with a thin layer of an antistatic and hydrophobic material such as carbonated polyethylene. This layer prevents the build-up of static electricity in the flow chamber and condensation of moisture on the sidewalls which might otherwise interfere with the flexing of membrane 35. As will be appreciated from the description below, the unimpeded flexing action of membrane 35 is important to maintain. According to an alternative embodiment, the sidewalls may be made entirely from an antistatic and hydrophobic material.

With particular reference to Fig. 7, there is shown a cross-section of a portion of membrane 35 which is piezoelectric and comprises a thin layer 36 of piezoelectric material, such as polyvinylidene fluoride and metallised surrounding layers, referenced 38 and 40.

A preferred form of the membrane 35 has a substantially vertical position within flow chamber 14. This avoids possible asymmetrical functioning of the membrane due to the effects of gravity.

As shown in Fig. 2, membrane 35 is preferably longer than the length of flow chamber 14 in which it is positioned. This ensures that membrane 35 takes up a wavelike position and that flat sides 42 of the membrane are in constant engagement with sidewalls 30 of the flow chamber, preferably at at least three locations.

Referring now to Fig. 2, it is seen that membrane 35, is, in the example, secured at ends 51 thereof about rods 52. Each rod 52 is in turn secured to a fixed rod 54 by means of a spring 53 contained within a housing 56. This type of mounting, it will be appreciated, permits limited longitudinal movement of the membrane within flow chamber 14.

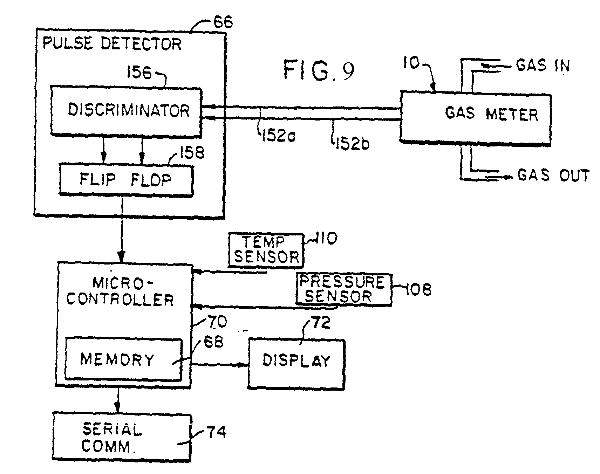

Referring now to Figs. 2 and 8, rounded guide blocks 48 are provided so as to induce instability of membrane 35, it being noted that, as each quantum of fluid passes thereacross, a very rapid change of position by flexure of membrane 35 is required. Provision of the guide blocks assists in switching of the membrane from one position to another under a very low input of kinetic energy, such as occurs in gas flows.

Although membrane 35 generally does not move along the length of the flow chamber, as the discrete quanta of fluid pass through the flow meter, causing the membrane to undulate, points of contact between the membrane and the flow chamber walls "travel" in the direction of fluid flow, the membrane moving by flexure fro ma first position just prior to release of a quantum of fluid, to a second position just after release of the quantum.

Guide extensions may be provided, made, for example, from wire mesh. While not interfering, therefore, with the fluid flow, they have configurations similar to the membrane in either of its two respective positions taken up just before and after release of a quantum of fluid. As the points of contact between the membrane and the chamber walls, which are coincident with the maximum points of curvature of the membrane, move along the flow chamber towards an end thereof, they leave side walls 30 and mount the guide extensions. These extensions help to induce a degree of instability that causes, under a relatively low kinetic energy input, a relatively fast change of position of the membrane between the positions taken up thereby just before and after release of a quantum of fluid.

Referring now to Figs. 3 and 9, there is shown an electrical connection 47 to a metallised layer of piezoelectric membrane 35 for carrying to a pulse detector unit 66 (Fig. 17) electrical signals generated by movement of membrane.

The pulse detector unit preferably includes signal processing electronic circuitry that is operative to recognize a particular shape of a pulse or an electrical signal corresponding to flexure of the membrane at the time of release of a quantum of fluid from outlet 22 of the fluid flow meter. It will be appreciated that it is important to be able to distinguish such pulses from background signals that are constantly being generated by the membrane.

A value for the volume of each quantum of fluid is either present or predetermined and stored in a memory 68 of a microprocessor 70, such that each signal received represents the flow of a reference volume of fluid through the flow meter. The microprocessor preferably also has a display 72 and a serial communication port 74.

According to a preferred embodiment of the invention, by using the preset value for each quantum and according to electrical signals received, the microprocessor is operative to calculate the flow rate. By using flow delivery data, as are typically contained in a look-up table, and by comparing the preset quantum value with a quantum value to a different value. By repeating these steps of calculating and comparing, in iterative fashion, the microprocessor is operative to reach a "true" quantum value and, hence, a true flow value.

Also, according to a preferred embodiment of the invention, pressure and temperature sensors, respectively referenced 108 and 110 (Fig. 9), are mounted in the flow chamber and are effective to continuously provide to the microprocessor pressure and temperature readings. The microprocessor also calculates any necessary adjustment of the present value for the volume of each quantity of fluid, according to the pressure and temperature data received.

The pressure and temperature readings may also be used by microcontroller 70 to provide an alarm indication when the temperature rises to a dangerously high level, which may indicate fire or where the pressure drops below a predetermined threshold value, which may serve as an indication of leakage in the system.

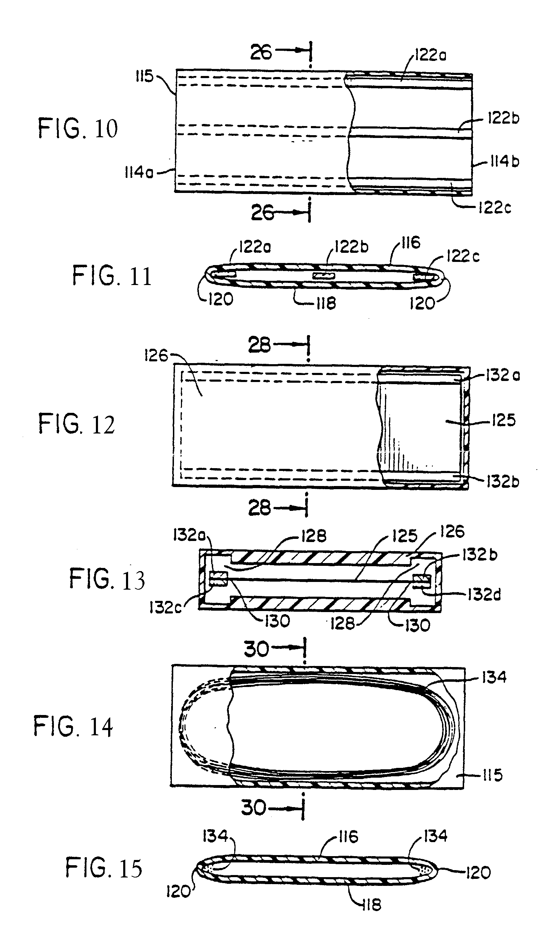

Turning now to the present invention as illustrated in Figs. 10 and 11, a first embodiment of the membrane is a membrane 115 formed of an upper layer 116 and a lower layer 118 bonded together along their lateral, longitudinal edges 120, typically either by heat sealing or by adhesive. Since it is desirable for the membrane to be as light as possible in order to be able to perform in any position with the least effect from gravity, the flexible layers of membrane may be typically formed to each have a thickness of approximately 5 microns. In this embodiment the membrane material can be composed of a flexible plastic and may for example be formed of polyethylene. Other types of thermoplastic or thermosetting plastics may also be suitable. A wide variety of plastics have been found to behave like a thermoplastic, deforming under high temperatures, thereby interfering with the natural flexing undulation of the material, and even deforming sufficiently to block fluid flow. Although metal foils resist deformation due to exposure to high heat, such metal foils are also subject to corrosion, and tend to crack and fail eventually. It has been found that placement of strips 122 a, b, c of a flexible material which retains undulation characteristics even at high temperatures within the envelope formed by the upper and lower layers of the two-layer membrane allows the membrane to retain its undulation characteristics even at high temperatures, to retain corrosion resistance, and allows the membrane to be formed with extremely thin layers of flexible plastic material. The strips 122 are typically formed of glass fibers such as optical fibers, but may also be formed of graphite fibers, fabric fibers, or can even be formed by thin metal strips.

Referring to Figs. 12 and 13, another form of the flexible membrane utilizing a single layer of flexible material 125 similar to the material used in the double-layer membrane 115, includes multiple strips 132 a, b, c, d mounted on the outer lengthwise edges of the membrane. Other strips could also be mounted at other locations lengthwise along the membrane, and the housing 126 is formed with corresponding inner channels 128 inset in the housing to form guides for the undulation motion of the strips. The strips are mounted at the edges 130 of the membrane. These strips 132 may similarly be formed of glass fibers, graphite fibers, fabric, metal strips, or the like, and are preferably bonded to the outer surface of the membrane, as by adhesive. In the embodiment of Figs. 10 and 11, the strips 122 are preferably only bonded to the membrane at the longitudinal ends 114 a, b of the membrane. It should also be recognized that the strips of heat resistant flexing material can be formed either in rectilinear shapes, or in curved shapes, or can be formed to have varying thicknesses along their length, in order to modify and adapt the flexing characteristics of the membranes.

Another form of a two-layer membrane is illustrated in Figs. 14 and 15, showing an elongated coil of heat resistant fiber material placed within a sealed envelope formed between the two layers of the membrane 115. The coil 134 naturally expands to be located around the inner periphery of the envelope, and in particular extends along the inner longitudinal edges 120 of the membrane. The elongated fiber is preferably a loose coil within the membrane, and is typically formed.of glass fibers, such as optical fibers, although graphite and fabric fibers are also suitable.

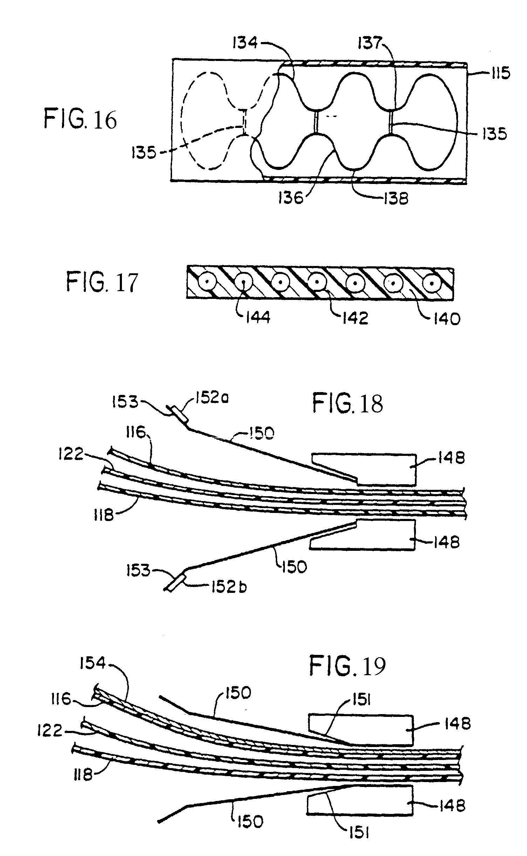

In order to create a membrane having different elasticity along the length of the membrane, the coil 134 can be tied together at regular intervals along the length of the membrane by fiber connecting ties 135. Thus, it will be appreciated that the portion of the coil 136 between the longitudinally extending portion of the coil 137 at the connecting ties and the longitudinally extending portion of the coil 138 at the inner periphery of the membrane envelope is more resistive to longitudinal flexing of the membrane, which can enhance the regular, flexing, pulsing undulation characteristics of the membrane, (see Fig. 16).

Still yet another form of a membrane with supporting fibers or strips to enable the membrane to retain its undulation characteristics is shown in Fig. 17. The single membrane layer 140 includes multiple inner channels 142, loosely containing elongated fibers 144, similar to the fibers referred to above. These fibers 144 are also preferably only bonded to the longitudinal ends 114 a, b of the membrane, to allow for free flexing of the membrane. Such a single layer membrane as is shown in Fig. 17 is typically approximately 60 microns thick.

It has also been found that flexing of the membrane in response to fluid flow through the flow meter may also produce vibration of the membrane not corresponding to individual quanta of fluid flow, making it difficult for the signal processing circuitry to distinguish between signal pulses representing quanta of fluid flow and vibrations, particularly at high fluid flow rates, which can induce turbulent flow in the meter.

One embodiment of the flow meter which is particularly useful in helping to discriminate between signal pulses representing quanta of fluid flow and vibrational pulses is illustrated in Fig. 18 Here, a double layer membrane having the upper layer 116 and the lower layer 118 with the middle layer of flexing supporting material 122 therebetween extends between guideblocks 148, having stopper members 150 mounted to and extending from the inner surfaces 151 of the upper and lower guideblocks. The stopper members thus serve as extension guides, and also limit the flexing motion of the membrane, which strikes the stopper members sequentially as it flexes. The stopper members are typically currently formed of thin leaf springs. Piezoelectric elements 152 a, b are mounted at the longitudinal ends 153, and preferably on the outer surfaces of the leaf spring stopper members. Thus, the alternating flexing of the membrane causes the membrane to strike the stopper members, causing the piezoelectric elements to sequentially generate signal pulses representing the passage of a quantum of fluid flow. The piezoelectric elements are in electrical communication with the pulse detector of the signal processing circuitry, as shown in Fig. 9.

In order to further discriminate the signals due to vibrations of the membrane as it strikes the stopper members, from signal pulses due to passage of quanta of fluid flow, a discriminator circuit 156 is included in the pulse detector, to generally p a s s signals over a predetermined threshold, which passes the received signals to a flip-flop circuit 158, which operates to pass individual pulse signals in alternating sequence from the first and second piezoelectric elements, to the microcontroller 70.

Another arrangement of a membrane between stopper members to cause a piezoelectric element to generate signal pulses principaly when the membrane strikes the stopper members is shown in Fig. 19. Here, the arrangement is similar to that shown in Fig. 18, except that the piezoelectric element 154 is in the form of a piezoelectric film or layer mounted to the membrane. The piezoelectric film can be mounted on one outside surface of the membrane, as is shown in Fig. 19, or can be contained loosely within the two layers of the membrane envelope, so that as the membrane undulates from a first position striking a first stopper member to a second position striking a second stopper member, the piezoelectric element sequentially generates electrical pulses representing passage of quanta of fluid flow. Thus, in the embodiment shown in Fig. 18, the piezoelectric signals are not a measure of bending per se of the membrane, and only represent striking of the membrane on the stopper members, where as in Fig. 19, the main signal from the piezoelectric material comes from the striking of the membrane against the stopper member, but also is generated by bending and vibration of the membrane. In the case in which the piezoelectric film is bonded to the membrane, the piezoelectric element is preferably bonded with an elastic adhesive, allowing the piezoelectric material to flex with the membrane.

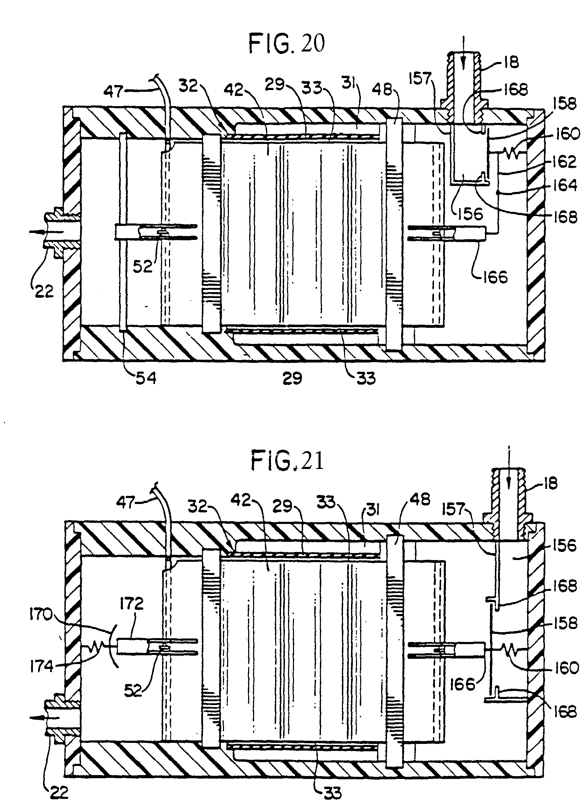

As mentioned previously, one of the problems associated with operation of the fluid flow meter at elevated temperatures is the creation of permanent curvature of the membrane. This permanent curvature of the membrane can also be caused under conditions of no flow, so that it may also be desirable to maintain the membrane in a fully flattened condition during periods of no flow or minimal flow. A minimum flow condition in a natural gas distribution system may merely involve the quantity of flow consumed by pilot flames, for example. One embodiment of the flow meter which can cause the membrane to become flattened during periods of no flow to help prevent permanent deformation of the membrane is illustrated in Fig. 20. An inner antechamber 156 is provided, which is connected to and in fluid communication with the fluid inlet port 18. The inner antechamber is defined by the antechamber housing 157, generally comprising an angled member, directing the fluid flow toward a diaphragm 158 positioned at the outlet of the inner antechamber, and connected to the main housing wall by a relatively weak compression spring 160. One end of a lever arm 162 is also connected to the spring, with the lever arm pivoting about the pivot point 164 mounted to the housing, and with the other end of the lever arm connected to the upstream end of the membrane spring mounting 166. Under a condition of no flow, the diaphragm is pressed against the diaphragm limit stops 168 on the inner antechamber housing, pivoting the lever arm so that the end of the membrane is pulled sufficiently taut to flatten the membrane. The spring 160 is sufficiently weak that a minimal fluid flow through the inlet port can dislodge the diaphragm from the diaphragm limit stops, to allow the flow meter to function.

Another similar embodiment of a mechanism for maintaining the membrane in a flattened condition during periods of no flow is illustrated in Fig. 21. An inner antechamber 156 is also in fluid communication with the fluid inlet port 18, with the inner antechamber being formed by the antechamber housing 157. A diaphragm 158 is moved in the direction of fluid flow when the quantity of fluid flow exceeds a minimum threshold, and the diaphragm is pressed up against the diaphragm limit stops 168 on the antechamber housing by the tension spring 160, connected between the diaphragm and the flow meter housing. The diaphragm is also connected to the upstream end of the membrane spring mounting. This mechanism operates in a fashion similar to the mechanism of Fig. 20, without pivoting of a lever arm.

In order to adaptively change the distance between the spring mounting clamps at the ends of the membrane to compensate for the tendency of higher flow rate to increase the degree of curvature of the membrane, a mechanism similar to a mechanism for flattening the membrane at the upstream end of the membrane may also be provided at the downstream end of the membrane. In the embodiment illustrated in Fig. 21, a cupped or parabolic drogue member 170 is attached to the clamp at the downstream end of the membrane spring mounting 172, and is further attached to the housing of the flow meter by a tension spring 174. At increasing flow rates, the drogue member will therefore exert an increasing tension on the membrane, to oppose the tendency of the membrane to be increasingly curved at the higher flow rates.

## Claims

1. A fluid flow meter, comprising:
a housing (12) having a pair of fluid ports (18, 22) and defining a fluid flow path (14) therebetween; and
a flexible membrane (35) extending lengthwise in the direction of fluid flow and mounted at opposing longitudinal end regions of the membrane within the housing, said membrane being adapted to flex so as to permit passage of discrete quanta of fluid along the flow path, each quantum of fluid having a known volume varying as a function of flow rate; characterised by at least one elongate resilient member (122) incorporated in the membrane and forming a plurality of lines of resilience extending between said longitudinal end regions of said membrane in the direction of said fluid flow path for providing the membrane with resilience for undulation by flexing.

2. The flow meter of claim 1, wherein said flexible membrane is formed of at least one layer of flexible material.

3. The flow meter of claim 2, wherein said flexible membrane is formed of two layers of flexible material sealingly bonded together about their perimeters.

4. The flow meter of claim 2, wherein said flexible membrane is formed of a tube of flexible material having two opposite end openings sealingly bonded together.

5. The flow meter of claim 2, wherein said flexible membrane is formed of a sheet of flexible material having at least one internal channel extending lengthwise in the direction of said fluid flow path.

6. The flow meter of claim 2, 3, 4 or 5 wherein said flexible material is non-resilient.

7. The flow meter according to any one of the preceding claims, wherein said at least one elongate resilient member (122) comprises a plurality of elongate resilient strips.

8. The flow meter of claim 7, wherein the strips are secured to at least one longitudinal end region (114) of said membrane.

9. The flow meter of claim 7 or 8, wherein said strips are rectilinear in shape.

10. The flow meter of claim 7, 8 or 9, wherein said strips vary in thickness in at least one dimension.

11. The flow meter of claim 7, 8, 9 or 10, wherein said flexible membrane is formed of two layers of flexible material and wherein said strips are enclosed between said layers of flexible material.

12. The flow meter of claim 11, wherein said strips are bonded over the length of said strips to at least one of said layers of flexible material.

13. The flow meter of any one of claims 1 to 6, wherein said at least one resilient member comprises elongate fiber material (144).

14. The flow meter of claim 13, when appended to claim 5, wherein said fiber material is enclosed in the at least one internal channel.

15. The flow meter of claim 1, 2, 3 or 4, wherein said at least one resilient member comprises a coil (134) of an elongate fiber material enclosed between two layers (116, 118) of flexible material, and at least a portion of said coil extends from one side edge to the other side edge of the membrane.

16. The flow meter of claim 15, wherein opposite sides of the coil are secured together at at least one location.

17. The fluid flow meter of any one of the preceding claims and wherein said membrane has a pair of opposite side edges extending in the direction of the fluid flow path to form seals with the housing.

18. The fluid flow meter of any one of the preceding claims and comprising guide means (148) mounted within said housing adjacent at least one of said first and second longitudinal end regions for assisting in flexure of the membrane.

19. The fluid flow meter of claim 18, wherein said guide means comprises a guide extension adjacent the associated longitudinal end region.

20. The fluid flow meter of claim 19, wherein said guide extension is permeable.

21. The fluid flow meter of claim 19, wherein said guide extension comprises a thin leaf spring (150).

22. The fluid flow meter of any one of claims 18 to 21, wherein said guide means comprises a pair of guide members (148) mounted within said housing adjacent one fluid port.

23. The fluid flow meter of any one of claims 18 to 22 and comprising said guide means mounted within said housing adjacent both longitudinal end regions of said membrane.

24. The fluid flow meter of any one of the preceding claims in combination with means responsive to membrane flexure for determining a fluid flow rate along said path.

25. The flow meter of claim 24 wherein the responsive means comprises means for generating electrical signals corresponding to flexure of said membrane, the generating means including stop means (150) adjacent to at least one of the membrane faces.

26. The flow meter of claim 25 when appended to claim 18, wherein said stop means comprises at least one stopper member (150) mounted on the guide means (148) mounted within said housing adjacent at least one of first and second longitudinal end regions of said flexible membrane.

27. The flow meter of claim 25 or 26, wherein said stop means comprises a pair of stopper members mounted within said housing adjacent respective membrane faces.

28. The flow meter of claim 27 when appended to claims 21 and 22 wherein said stopper members comprises leaf springs mounted to both of said guide members of the pair.

29. The flow meter of claim 25, 26, 27 or 28, wherein said means for generating electrical signals includes piezoelectric material mounted within said housing such that undulation of said membrane causes said membrane to strike said stop means, causing said piezoelectric material to generate an electrical signal.

30. The flow meter of claim 29, when appended to claim 18, wherein said stop means comprises a stopper member mounted in said guide means, and said piezoelectric material is mounted on at least one stopper member.

31. The flow meter of claim 29, wherein said piezoelectric material is mounted on at least one face of said flexible membrane.

## Patentansprüche

1. Fluiddurchflußmeßgerät, umfassend:
ein Gehäuse (12), das ein Paar Fluidöffnungen (18, 22) aufweist, zwischen denen ein Fluidflußpfad (14) bestimmt ist; und
eine flexible Membran (35), die sich in der Längsrichtung des Fluidflusses erstreckt und an gegenüberliegenden Längsendbereichen der Membran im Gehäuse montiert ist, wobei die Membran so eingerichtet ist, daß sie sich biegen kann und den Durchgang einzelner Fluidmengen entlang des Fluidpfads erlaubt und jede Fluidmenge ein bekanntes Volumen hat, das sich abhängig von der Flußrate ändert,
gekennzeichnet durch mindestens ein längliches elastisches Glied (122), das in die Membran aufgenommen ist und eine Anzahl elastischer Linien bildet, die zwischen den Längsendbereichen der Membran in Richtung des Fluidflußpfads verlaufen, um der Membran für eine Wellenbewegung durch Verbiegen Elastizität zu verleihen.

2. Durchflußmeßgerät nach Anspruch 1, wobei die flexible Membran aus mindestens einer Schicht eines flexiblen Materials ausgebildet ist.

3. Durchflußmeßgerät nach Anspruch 2, wobei die flexible Membran aus zwei Schichten flexiblen Materials ausgebildet ist, die an ihren Umfang dicht miteinander verbunden sind.

4. Durchflußmeßgerät nach Anspruch 2, wobei die flexible Membran aus einem Rohr aus flexiblem Material hergestellt ist, das zwei gegenüberliegende Endöffnungen aufweist, die dicht miteinander verbunden sind.

5. Durchflußmeßgerät nach Anspruch 2, wobei die flexible Membran aus einem Blatt flexiblen Materials ausgebildet ist, das mindestens einen inneren Kanal aufweist, der sich in Längsrichtung des Fluidflußpfads erstreckt.

6. Durchflußmeßgerät nach Anspruch 2, 3, 4 oder 5, wobei das flexible Material nicht elastisch ist.

7. Durchflußmeßgerät nach irgendeinem der vorhergehenden Ansprüche, wobei das mindestens eine längliche elastische Glied (122) eine Anzahl länglicher elastischer Streifen enthält.

8. Durchflußmeßgerät nach Anspruch 7, wobei die Streifen an mindestens einem Längsendbereich (114) der Membran befestigt sind.

9. Durchflußmeßgerät nach Anspruch 7 oder 8, wobei die Streifen eine geradlinige Form haben.

10. Durchflußmeßgerät nach Anspruch 7, 8 oder 9, wobei sich die Streifendicke in mindestens einer Dimension ändert.

11. Durchflußmeßgerät nach Anspruch 7, 8, 9 und 10, wobei die flexible Membran aus zwei Schichten flexiblen Materials besteht und die Streifen zwischen den Schichten des flexiblen Materials eingeschlossen sind.

12. Durchflußmeßgerät nach Anspruch 11, wobei die Streifen über ihre Länge mit zumindest einer Schicht des flexiblen Materials verbunden sind.

13. Durchflußmeßgerät nach irgendeinem der Ansprüche 1 bis 6, wobei das mindestens eine elastische Glied ein längliches Fasermaterial (144) enthält.

14. Durchflußmeßgerät nach Anspruch 13, wenn abhängig von Anspruch 5, wobei das Fasermaterial in dem mindestens einen inneren Kanal eingeschlossen ist.

15. Durchflußmeßgerät nach Anspruch 1, 2, 3 oder 4, wobei das mindestens eine elastische Glied eine Spule (134) aus einem länglichen Fasermaterial enthält, die zwischen zwei Schichten (116, 118) des flexiblen Materials eingeschlossen ist, und sich zumindest ein Abschnitt der Spule von einer Seitenkante der Membran zur anderen Seitenkante erstreckt.

16. Durchflußmeßgerät nach Anspruch 15, wobei gegenüberliegende Seiten der Spule an zumindest einer Stelle aneinander befestigt sind.

17. Fluiddurchflußmeßgerät nach irgendeinem der vorhergehenden Ansprüche, wobei die Membran ein Paar gegenüberliegende Seitenkanten aufweist, die in Richtung des Fluidflußpfads verlaufen, damit die Seitenkanten mit dem Gehäuse Dichtungen bilden.

18. Fluiddurchflußmeßgerät nach irgendeinem der vorhergehenden Ansprüche, zudem umfassend eine Führungsvorrichtung (148), die innerhalb des Gehäuses nahe an mindestens einem der ersten und zweiten Längsendbereiche montiert ist, um die Biegung der Membran zu unterstützen.

19. Fluiddurchflußmeßgerät nach Anspruch 18, wobei die Führungsvorrichtung einen Führungsfortsatz nahe an dem zugehörigen Längsendbereich umfaßt.

20. Fluiddurchflußmeßgerät nach Anspruch 19, wobei der Führungsfortsatz permeabel ist.

21. Fluiddurchflußmeßgerät nach Anspruch 19, wobei der Führungsfortsatz eine dünne Blattfeder (150) enthält.

22. Fluiddurchflußmeßgerät nach irgendeinem der Ansprüche 18 bis 21, wobei die Führungsvorrichtung ein Paar Führungsglieder (148) enthält, die innerhalb des Gehäuses nahe an einer Fluidöffnung montiert sind.

23. Fluiddurchflußmeßgerät nach irgendeinem der Ansprüche 18 bis 22, das die Führungsvorrichtung innerhalb des Gehäuses enthält, und zwar nahe an beiden Längsendbereichen der Membran montiert.

24. Fluiddurchflußmeßgerät nach irgendeinem der vorhergehenden Ansprüche in Verbindung mit Einrichtungen, die auf die Membranbiegung ansprechen, um eine Fluidflußrate entlang des Pfads zu erfassen.

25. Durchflußmeßgerät nach Anspruch 24, wobei die Ansprecheinrichtung eine Vorrichtung zum Erzeugen elektrischer Signale enthält, die der Membranbiegung entsprechen, und die Erzeugungsvorrichtung Anschlagvorrichtungen (150) nahe an mindestens einer der Membranflächen enthält.

26. Durchflußmeßgerät nach Anspruch 25 wenn abhängig von Anspruch 18, wobei die Anschlagvorrichtung mindestens ein auf der Führungsvorrichtung (148) montiertes Anschlagglied (150) enthält, das innerhalb des Gehäuses nahe an mindestens einem der ersten und zweiten Längsendbereiche der flexiblen Membran befestigt ist.

27. Durchflußmeßgerät nach Anspruch 25 oder 26, wobei die Anschlagvorrichtung ein Paar Anschlagglieder enthält, die innerhalb des Gehäuses nahe an den jeweiligen Membranflächen montiert sind.

28. Durchflußmeßgerät nach Anspruch 27 wenn abhängig von den Ansprüchen 21 und 22, wobei das Anschlagglied Blattfedern enthält, die auf beiden Führungsgliedern des Paars montiert sind.

29. Durchflußmeßgerät nach Anspruch 25, 26, 27 oder 28, wobei die Vorrichtung zum Erzeugen elektrischer Signale piezoelektrisches Material enthält, das innerhalb des Gehäuses montiert ist, so daß eine Wellenbewegung der Membran bewirkt, daß die Membran an die Anschlagvorrichtung anstößt und das piezoelektrische Material ein elektrisches Signal erzeugt.

30. Durchflußmeßgerät nach Anspruch 29 wenn abhängig von Anspruch 18, wobei die Anschlagvorrichtung ein in der Führungsvorrichtung montiertes Anschlagglied enthält und das piezoelektrische Material auf mindestens einem Anschlagglied befestigt ist.

31. Durchflußmeßgerät nach Anspruch 29, wobei das piezoelektrische Material auf mindestens einer Fläche der flexiblen Membran befestigt ist.

## Revendications

1. Débitmètre pour fluide, qui comprend :
- un boîtier (12) comportant une paire de tubulures pour fluide (18, 22) et définissant un trajet (14) d'écoulement de fluide entre elles, et
- une membrane flexible (35) qui s'étend sur la longueur dans la direction d'écoulement du fluide et qui est fixée en des régions d'extrémités longitudinales opposées de la membrane à l'intérieur du boîtier, ladite membrane pouvant fléchir pour permettre le passage de quantités définies de fluide le long du trajet d'écoulement, chaque quantité de fluide ayant un volume connu qui varie en fonction du débit,
caractérisé par au moins une élément élastique allongé (122) incorporé dans le membrane et formant une pluralité de lignes d'élasticité qui s'étendent entre lesdites régions d'extrémités longitudinales de la membrane dans la direction dudit trajet d'écoulement du fluide pour procurer à la membrane une élasticité lui permettant d'onduler par flexion.

2. Débitmètre selon la revendication 1, dans lequel ladite membrane flexible est formée d'au moins une couche de matériau flexible.

3. Débitmètre selon la revendication 2, dans lequel ladite membrane flexible est formée de deux couches de matériau flexible fixées l'une à l'autre de manière étanche sur leur pourtour.

4. Débitmètre selon la revendication 2, dans lequel ladite membrane flexible est formée d'un tube de matériau flexible ayant deux ouvertures d'extrémités opposées fixées l'une à l'autre de manière étanche.

5. Débitmètre selon la revendication 2, dans lequel ladite membrane flexible est formée d'une feuille de matériau flexible ayant au moins un canal intérieur qui s'étend sur la longueur dans la direction du trajet d'écoulement du fluide.

6. Débitmètre selon la revendication 2, 3, 4 ou 5, dans lequel ledit matériau flexible est non élastique.

7. Débitmètre selon l'une quelconque des précédentes revendications, dans lequel ledit élément élastique allongé (122) au nombre d'au moins un comprend une pluralité de bandes élastiques allongées.

8. Débitmètre selon la revendication 7, dans lequel les bandes sont fixées à au moins une région d'extrémité longitudinale (114) de ladite membrane.

9. Débitmètre selon la revendication 7 ou 8, dans lequel lesdites bandes ont une forme rectiligne.

10. Débitmètre selon la revendication 7, 8 ou 9, dans lequel lesdites bandes ont une épaisseur qui varie dans au moins une dimension.

11. Débitmètre selon la revendication 7, 8, 9 ou 10, dans lequel ladite membrane flexible est formée de deux couches de matériau flexible et dans lequel lesdites bandes sont enfermées entre lesdites couches de matériau flexible.

12. Débitmètre selon la revendication 11, dans lequel lesdites bandes sont liées sur leur longueur à l'une au moins desdites couches de matériau flexible.

13. Débitmètre selon l'une quelconque des revendication 1 à 6, dans lequel ledit élément élastique au nombre d'au moins un comprend un matériau en fibre allongé (144).

14. Débitmètre selon la revendication 13 quand elle dépend de la revendication 5, dans lequel ledit matériau en fibre est enfermé dans le canal intérieur au nombre d'au moins un.

15. Débitmètre selon la revendication 1, 2, 3 ou 4, dans lequel ledit élément élastique au nombre d'au moins un comprend un enroulement (134) de matériau en fibre allongé, enfermé entre deux couches (116, 118) de matériau flexible, et une partie au moins dudit enroulement s'étend d'un bord latéral à l'autre de ladite membrane.

16. Débitmètre selon la revendication 15, dans lequel les côtés opposés dudit enroulement sont fixés ensemble en au moins un emplacement.

17. Débitmètre selon l'une quelconque des précédentes revendications, dans lequel ladite membrane a une paire de bords latéraux opposés qui s'étendent dans la direction du trajet d'écoulement de fluide pour former des joints d'étanchéité avec le boîtier.

18. Débitmètre selon l'une quelconque des précédentes revendications, comprenant un moyen de guidage (148) monté dans ledit boîtier pour être adjacent à l'une au moins desdites première et deuxième régions d'extrémités longitudinales afin d'aider à la flexion de la membrane.

19. Débitmètre selon la revendication 18, dans lequel ledit moyen de guidage comprend un prolongement de guidage adjacent à la région d'extrémité longitudinale associée.

20. Débitmètre selon la revendication 19, dans lequel ledit prolongement de guidage est perméable.

21. Débitmètre selon la revendication 19, dans lequel ledit prolongement de guidage comprend un mince ressort à lame (150).

22. Débitmètre selon l'une quelconque des revendication 18 à 21, dans lequel ledit moyen de guidage comprend une paire d'éléments de guidage (148) montés dans ledit boîtier pour être adjacents à une tubulure pour fluide.

23. Débitmètre selon l'une quelconque des revendication 18 à 22, dans lequel ledit moyen de guidage est monté dans ledit boîtier pour être adjacent aux deux régions d'extrémités longitudinales de ladite membrane.

24. Débitmètre selon l'une quelconque des précédentes revendications, associé à un moyen qui réagit à une flexion de la membrane pour déterminer un débit de fluide le long dudit trajet.

25. Débitmètre selon la revendication 24, dans lequel le moyen de réaction comprend un moyen servant à produire des signaux électriques correspondant à la flexion de ladite membrane, le moyen de production de signaux comprenant un moyen d'arrêt (150) adjacent à l'une au moins des faces de la membrane.

26. Débitmètre selon la revendication 25 quand elle dépend de la revendication 18, dans lequel ledit moyen d'arrêt comprend au moins un élément d'arrêt (150) monté sur le moyen de guidage (148) se trouvant à l'intérieur dudit boîtier adjacent à l'une au moins des première et deuxième régions d'extrémités longitudinales de ladite membrane flexible.

27. Débitmètre selon la revendication 25 ou 26, dans lequel ledit moyen d'arrêt comprend une paire d'éléments d'arrêt montés dans ledit boîtier pour être adjacents aux faces respectives de la membrane.

28. Débitmètre selon la revendication 27 lorsqu'elle dépend des revendications 21 et 22, dans lequel lesdits éléments d'arrêt sont des ressorts à lame fixés aux deux éléments de guidage de ladite paire.

29. Débitmètre selon la revendication 25, 26, 27 ou 28, dans lequel ledit moyen de production de signaux électriques comprend un matériau piézo-électrique monté dans ledit boîtier de telle sorte qu'une ondulation de ladite membrane amène ladite membrane à frapper ledit moyen d'arrêt, faisant produire audit matériau piézo-électrique un signal électrique.

30. Débitmètre selon la revendication 29 quand elle dépend de la revendication 18, dans lequel ledit moyen d'arrêt comprend un élément d'arrêt monté dans ledit moyen de guidage et ledit matériau piézo-électrique est monté sur au moins un élément d'arrêt.

31. Débitmètre selon la revendication 29, dans lequel ledit matériau piézo-électrique est monté sur au moins une face de ladite membrane flexible.
